# EUROPEAN PATENT APPLICATION

(11) **EP 4 831 586 A1**
(43) Date of publication of application: **28.10.2026**
(21) Application number: 25226853.7
(22) Date of filing: 23.12.2025
(51) Int. Cl.: G01C 21/00

(54) **METHODS AND VEHICLES OF CONSTRUCTING WAITING AREA ROADS IN MAPS, AND CLOUD SERVERS**

(30) Priority: 24.01.2025 CN 202510112379
(71) Applicant: Guangzhou Xiaopeng Autopilot Technology Co., Ltd., Guangzhou, Guangdong 510000 (CN)
(72) Inventor: HU, Guo, Guangzhou (CN); YIN, Zeping, Guangzhou (CN); DAI, Zhongjun, Guangzhou (CN); JIANG, Kai, Guangzhou (CN); YUE, Pengyu, Guangzhou (CN)
(74) Representative: Ran, Handong

(57) **Abstract**

A method and a vehicle of constructing a waiting area road in a map, and a cloud server are provided. The method includes: acquiring historical vehicle uploaded data, which includes road junction semantic information corresponding to the waiting area road and historical vehicle travelling trajectories uploaded by the historical vehicle; generating waiting area road structure information based on the road junction semantic information and the historical vehicle travelling trajectories; and in response to receiving positioning information and/or navigation route information reported by a target vehicle, transmitting the waiting area road structure information to the target vehicle, so that the target vehicle displays the waiting area road structure information. The method solves technical problems in relevant technologies of low efficiency and poor accuracy in identifying a waiting area road at a road junction area.

## Description

### TECHNICAL FIELD

This application relates to the field of autonomous driving technologies, and specifically to a method and a vehicle for constructing a waiting area road in a map, and a cloud server.

### BACKGROUND

Autonomous vehicles may encounter various types of road junctions during their travelling. For example, some road junctions are provided with a turn-waiting area road to improve traffic efficiency. Before the green light shows, vehicles are allowed to enter the turn-waiting area road to queue up. Once the green light shows, the vehicles can pass through the road junction in a more rapid way, which improves traffic efficiency and reduces congestion. Accurate identification of the structure of a turn-waiting area road is therefore crucial for improving autonomous driving experience. In related technologies, in scenarios with high-definition map coverage, structure information of turn-waiting area roads may be directly used from high-definition maps. However, coverage of high-definition maps is extremely limited due to its high cost and other reasons.

No effective solutions have been proposed so far to address the above issues.

### SUMMARY

Embodiments of the present disclosure provide a method and a vehicle for constructing a waiting area road in a map, and a cloud server, to at least solve the technical problems in related technologies of low efficiency and poor accuracy in identifying a waiting area road at a road junction area.

The embodiments of the present disclosure, in one aspect, provide a method for constructing a waiting area road in a map. The method includes: acquiring historical vehicle uploaded data, wherein the historical vehicle uploaded data comprises road junction semantic information corresponding to the waiting area road and at least one historical vehicle travelling trajectory uploaded by a historical vehicle; generating waiting area road structure information based on the road junction semantic information and the at least one historical vehicle travelling trajectory; and in response to receiving position information and/or navigation route information reported by a target vehicle, distributing the waiting area road structure information to the target vehicle, so that the target vehicle displays the waiting area road structure information.

The embodiments of the present disclosure, in another aspect, provide a vehicle for constructing a waiting area road in a map. The vehicle includes: a sending module, configured to send position information and navigation route information of a vehicle to a cloud server; a receiving module, configured to receive waiting area road structure information distributed by the cloud server, the waiting area road structure information being waiting area road structure information of a road junction to be traversed within a preset distance from a position indicated by the position information; and a displaying module, configured to display the waiting area road structure information on a graphical user interface of the vehicle.

The embodiments of the present disclosure, in another aspect, provide another vehicle for constructing a waiting area road in a map. The vehicle includes: a sending module, configured to send navigation route information of the vehicle to a cloud server; a receiving module, configured to receive all waiting area road structure information corresponding to the navigation route distributed by the cloud server; a matching module, configured to find, from all the waiting area road structure information, a corresponding piece of waiting area road structure information that matches position information of the vehicle, the corresponding piece of waiting area road structure information being waiting area road structure information of a road junction to be traversed within a preset distance from a position indicated by the position information; and a displaying module, configured to display, on a graphical user interface of the vehicle, the corresponding piece of waiting area road structure information that matches the position information.

The embodiments of the present disclosure, in further another aspect, provide further another vehicle for constructing a waiting area road in a map. The vehicle includes: a sending module, configured to send position information and navigation route information of the vehicle to a cloud server; a receiving module, configured to periodically receive preset pieces of waiting area road structure information distributed by the cloud server, the waiting area road structure information being waiting area road structure information of road junctions to be traversed on the navigation route; a matching module, configured to find, from the preset pieces of waiting area road structure information, a corresponding piece of waiting area road structure information that matches the position information of the vehicle, the corresponding piece of waiting area road structure information being waiting area road structure information of a road junction to be traversed within a preset distance from a position indicated by the position information; and a displaying module, configured to display, on a graphical user interface of the vehicle, the corresponding piece of waiting area road structure information that matches the position information.

The embodiments of the present disclosure, in still another aspect, provide still another vehicle for constructing a waiting area road in a map. The vehicle includes: an acquiring module, configured to acquire position information and navigation route information of a vehicle, and vehicle historical data stored in a storage module, the vehicle historical data including road junction semantic information corresponding to the waiting area road and at least one historical travelling trajectory; a generating module, configured to generate waiting area road structure information based on the road junction semantic information and the at least one historical travelling trajectory; a matching module, configured to find a corresponding piece of waiting area road structure information that matches the position information and the navigation route information; and a displaying module, configured to display the corresponding piece of waiting area road structure information on a graphical user interface of the vehicle.

The embodiments of the present disclosure, in another aspect, provide a cloud server. The cloud server includes a processor, and a memory configured to store instructions executable by the processor. The processor is configured to execute the instructions to implement the method in the embodiments of the present disclosure.

The embodiments of the present disclosure, in another aspect, provide a computer-readable storage medium which includes an executable program stored thereon. The executable program, when executed, controls a device in which the computer-readable storage medium is located to implement the method in the embodiments of the present disclosure.

The embodiments of the present disclosure, in another aspect, provide a computer program product which includes a computer program. The computer program, when executed by a process, implements the method in the embodiments of the present disclosure.

The embodiments of the present disclosure, in further another aspect, provide another computer program product which includes a non-volatile computer-readable storage medium. The non-volatile computer-readable storage medium is configured to store a computer program. The computer program, when executed by a process, implements the method in the embodiments of the present disclosure.

The embodiments of the present disclosure, in another aspect, provide a computer program. The computer program, when executed by a process, implements the method in the embodiments of the present disclosure.

In the embodiments of the present disclosure, historical vehicle uploaded data is acquired, which includes historical vehicle travelling trajectories and road junction semantic information corresponding to the waiting area road uploaded by historical vehicles. Then, the waiting area road structure information is generated based on the road junction semantic information and the historical vehicle travelling trajectories. Finally, in response to receiving the position information and/or the navigation route information reported by the target vehicle, the waiting area road structure information is distributed to the target vehicle, so that the target vehicle displays the waiting area road structure information. This helps the target vehicle better understand the situation of the waiting area road, thereby improving driving safety and traffic efficiency at the road junction. Furthermore, distributing the waiting area road structure information to the target vehicle for display can effectively improve abilities of the autonomous driving system to recognize and plan the waiting area road, reducing complexity of real-time sensing and optimizing driving experience. The method of constructing a waiting area road in a map provided by the embodiments of the present disclosure improves efficiency and accuracy of identifying a waiting area road at a road junction area, reduces computing load, optimizes driving experience, and thus solves the technical problems of low efficiency and poor accuracy in identifying a waiting area road at a road junction area.

### BRIEF DESCRIPTION OF THE DRAWINGS

The accompanying drawings described herein are provided for further understanding of the present disclosure and form part of the present disclosure. Illustrative embodiments of the present disclosure and their descriptions are intended to explain the present disclosure and do not constitute an undue limitation of the present disclosure. In the drawings:
Fig. 1 is a flowchart of a method of constructing a waiting area road in a map according to an embodiment of the present disclosure;
Fig. 2 is a schematic diagram showing road junction semantic information according to an embodiment of the present disclosure;
Fig. 3 is a schematic diagram of a road junction area according to an embodiment of the present disclosure;
Fig. 4 is a schematic diagram of another road junction area according to an embodiment of the present disclosure;
Fig. 5 is a schematic diagram showing an association and snapping process according to an embodiment of the present disclosure;
Fig. 6 is a schematic diagram showing waiting area road structure information according to an embodiment of the present disclosure;
Fig. 7 is a schematic diagram showing a process of generating a centerline of a waiting area according to an embodiment of the present disclosure;
Fig. 8 is a structural block diagram of a vehicle constructing a waiting area road in a map according to an embodiment of the present disclosure;
Fig. 9 is a structural block diagram of another vehicle constructing a waiting area road in a map according to an embodiment of the present disclosure;
Fig. 10 is a structural block diagram of yet another vehicle constructing a waiting area road in a map according to an embodiment of the present disclosure; and
Fig. 11 is a structural block diagram of further another vehicle constructing a waiting area road in a map according to an embodiment of the present disclosure.

### DETAILED DESCRIPTION

The following gives a clear and thorough description of technical solutions in embodiments of the present disclosure by reference to accompanying drawings in the embodiments, so that those of ordinary skill in the art can have a better understanding of the technical solutions of the present disclosure. Apparently, the embodiments described are only some, but not all, of the embodiments of the present disclosure. Other embodiments obtained based on the embodiments in the present disclosure by those of ordinary skill in the art without paying any creative effort should all fall within the protection scope of the present disclosure.

It should be noted that terms "first", "second", etc. appeared in the specification, claims and the above-mentioned drawings are used to distinguish similar features, and are not necessarily used to describe a specific order or sequence. It should be appreciated that such terms used in this way are interchangeable where appropriate so that the embodiments described herein may be implemented in an order other than those illustrated or described herein. In addition, terms "include", "comprise", and "have" and any variations thereof are intended to cover non-exclusive inclusions. For example, a process, method, system, product or device including a series of steps or units is not necessarily limited as including only those explicitly listed steps or units, but rather, may also include other steps or units that are not explicitly listed or steps or units that are inherent to such a process, method, product or device.

An embodiment of the present disclosure provides a method of constructing a waiting area road. It should be noted that steps shown in flow charts of the drawings may be performed in a computer system such as a set of computer executable instructions. Although logical sequences are shown in the flow charts, in some cases the steps shown or described may be performed in sequences different from those shown here.

This method embodiment may be implemented in an electronic device containing a memory and a processor or implemented in a similar computing device. Taking implementation on a computer terminal as an example, the computer terminal may include one or more processors (the processor may include but is not limited to a central processing unit (CPU), a graphics processing unit (GPU), a digital signal processing (DSP) chip, a micro controller unit (MCU), a field programmable gate array (FPGA), a neural-network processor unit (NPU), a tensor processing unit (TPU), an artificial intelligence (AI) type processor, etc.) and a memory for storing data. Optionally, the computer terminal may also include a transmission device, an input/output device, and a display device to provide communication functions. Those of ordinary skill in the art will appreciate that the structural description above is merely illustrative and does not limit the structure of the computer terminal. For example, the computer terminal may also include more or fewer components than those described above or have a configuration different from the above described.

The memory may be configured to store computer programs, for example software programs and modules of application software, such as computer programs corresponding to the method of constructing a waiting area road in a map according to the embodiments of the present disclosure. The processor performs various functional applications and data processing by executing the computer programs stored in the memory, i.e., implementing the method of constructing a waiting area road in a map. The memory may include a high-speed random access memory and may also include a non-volatile memory such as one or more magnetic storage devices, flash memory, or other non-volatile solid-state memories. In some instances, the memory may further include memories disposed remotely from the processor. These remotely disposed memories may be connected to a mobile terminal via networks. Examples of the networks include, but are not limited to, the Internet, intranets, local area networks, mobile communication networks, and combinations thereof.

The transmission device is configured to receive or transmit data via a network. Specific examples of the network may include a wireless network provided by a communication provider for the mobile terminal. In one instance, the transmission device includes a network interface controller (NIC) which may be connected to another network device through a base station to communicate with the Internet. In one instance, the transmission device may be a radio frequency (RF) module which is configured to communicate wirelessly with the Internet.

The display device may be, for example, a touch-screen liquid crystal display (LCD) and a touch display (also known as a "touch screen"). The LCD allows a user to interact with a user interface of the mobile terminal. In some embodiments, the mobile terminal has a graphical user interface (GUI). The user may interact with the GUI by way of finger touch or gestures on the touch screen to realize human-computer interactions. The human-computer interaction functions here may optionally include: creating web pages, drawing, word processing, creating electronic documents, games, video conferencing, instant messaging, sending and receiving emails, call interfaces, playing digital videos, playing digital music and/or web browsing, etc. Executable instructions configured to perform the above human-computer interaction functions are configured/stored in one or more computer program products or computer-readable storage media executable by the processor.

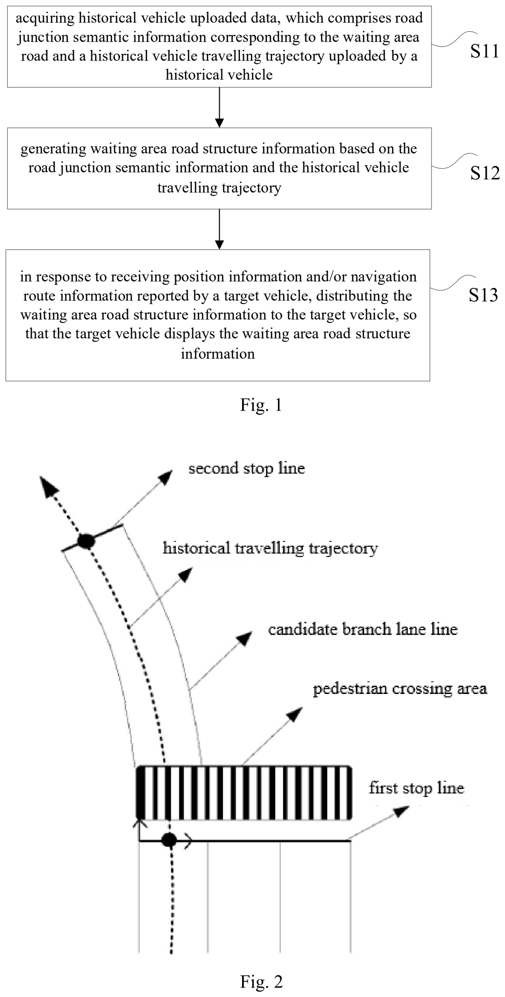

Fig. 1 is a flow chart of a method of constructing a waiting area road in a map according to an embodiment of the present disclosure. As shown in Fig. 1, the method includes the following steps.

In step S11, historical vehicle uploaded data is acquired. The historical vehicle uploaded data includes: road junction semantic information corresponding to the waiting area road and at least one historical vehicle travelling trajectory uploaded by historical vehicles.

In step S12, waiting area road structure information is generated based on the road junction semantic information and the at least one historical vehicle travelling trajectory.

In step S13, in response to receiving position information and/or navigation route information reported by a target vehicle, the waiting area road structure information is distributed to the target vehicle, so that the target vehicle displays the waiting area road structure information.

The method for constructing a waiting area road in a map provided in the embodiments of the present disclosure may be applied to low-precision maps. A low-precision map is map data used for basic navigation and path planning. It contains basic information about road networks, such as positions of roads, lane directions and names, intersections, highway entrance and exit, etc. Compared with a high-precision map, a low-precision map exhibits relatively low accuracy and contain relatively less detailed information, and data stored therein is relatively simple in its format and structure and is thus easy to store and transmit. Low-precision maps are therefore suitable for most consumer-grade navigation devices and applications.

In an optional embodiment, the waiting area road includes at least one of the following: a left-turn waiting area road, a right-turn waiting area road, and a straight-through waiting area road. A left-turn waiting area road or a right-turn waiting area road may also be alternatively described as a turn waiting area road. Each type of waiting area road has a specific geometric layout and specific traffic rules. It is therefore necessary to consider differences in these different types of roads when constructing the roads, to provide more accurate guidance for autonomous vehicles or drivers.

Specifically, at intersections in urban areas, especially in busy traffic environments, provision of a left-turn waiting area road can effectively improve traffic mobility and safety. For example, when constructing a left-turn waiting area road, it is necessary to identify a left-turn lane, a left-turn stop line, a left-turn indicator, and a specific position and edges of the left-turn waiting area. Specifically, a left-turn lane is usually located on a left side of an intersection, adjacent to an oncoming through lane or right-turn lane. Therefore, when constructing a left-turn waiting area road, it is necessary to consider the relative position relationship between the left-turn waiting area road and the oncoming lanes.

Similar to the left-turn waiting area, when constructing a right-turn area road, it is also necessary to identify a right-turn lane, a stop line, an indicator, and edges of the waiting area, but its layout and traffic rules are different from those of the left-turn waiting area. For example, the right-turn waiting area does not need to be controlled by a specialized indicator, but by a regular traffic light. In addition, the right-turn waiting area road is more complex in its geometry and requires handling of special scenarios such as bends and narrow road junctions.

In some cases, through lanes also require waiting areas, especially at large intersections or areas with complex traffic flows. When constructing a straight-through waiting area road, it is necessary to pay attention to a stop line of the through lane, edges of the straight-through waiting area, and any traffic elements that may affect movement of straight-through vehicles, such as bus lanes, a starting point of a right-turn lane, etc. The construction of the straight-through waiting area road may focus more on linearity and efficiency of the road to reduce waiting time of a straight-through vehicle at the intersection, so that speed of traffic flow can be improved.

It should be noted that in the embodiments of the present disclosure, descriptions are given by way of examples where the waiting area road is a turn waiting area road, which does not constitute a specific restriction on the waiting area road. Waiting area roads are usually used at intersections in urban areas, especially for improving traffic efficiency and driving safety at the intersections. waiting area roads have specific geometric layouts and signs used to guide a vehicle into a specific area while waiting for a green light, to thereby allow for faster and more orderly passage through the intersections when the light turns green.

As an example, a straight-through waiting area road is usually rectangular, and a boundary line of a straight-through waiting area generally consists of bolded or specially marked lane lines which define a rectangular area and clearly indicate when a driver can enter the waiting area to wait. At the entrance to the straight-through waiting area, there is a stop line (usually a solid line) behind which a vehicle must stop when the red light is on until it receives a signal to enter the waiting area. The straight-through waiting area is usually controlled by a traffic light, and sometimes a dedicated straight-through indicator is set up to indicate that a vehicle going straight can enter the waiting area and wait for the green light. In the straight-through waiting area, guiding arrow markings may be provided to indicate a direction for vehicles waiting and a way for the vehicles to travel when the green light shows, to ensure correct arrangement of the vehicles in the waiting area and avoid wrong proceeding.

As an example, a turn waiting area road is usually fan-shaped or specially shaped, located near a turning lane at an intersection and separated from a through lane. The turn waiting area road may have special lane lines, a stop line, and guiding arrow markings. For example, an edge of the turn waiting area road may be indicated by a lane line that is bolded or has a specific marking (such as zigzags), to distinguish the road from a regular lane. A traffic light at the intersection may allow a vehicle to enter the turn waiting area road to wait during a specific traffic pattern (e.g., left turn and right turn).

A low-precision map provides relatively low-precision road information, usually including basic directions of roads, locations of intersections, types of roads, and simple navigation information. A low-precision map is mainly used for basic route planning and navigation and does not provide detailed information and specific layouts of turn waiting area roads. In a low-precision map, complex structures of intersections may be simplified, lacking descriptions of specific positions and shapes of lane lines and stop lines of turn waiting areas, as well as control information for traffic lights. As a result, navigation systems or autonomous driving assistance systems relying only on low-precision maps are not able to provide accurate guidance on entering the turn waiting area, and when approaching a complex intersection, vehicles need to rely on a real-time sensing system to supplement these critical details.

The embodiments of the present disclosure, by constructing and displaying the waiting area road in a low-precision map, can not only broaden the application scope of autonomous driving technologies and reduce their implementation cost, but also ensure driving safety, improve driving experience, and promote technological iteration and advancement to a certain extent. Specifically, high-precision maps are costly to produce and maintain and are very limited in their coverage, which limits widespread application of autonomous driving technologies. Constructing the structure of the waiting area road in a low-precision map can reduce hardware and software costs of autonomous driving systems, allowing autonomous driving systems to be applied to more vehicle models and scenarios, thereby promoting popularization of the technology. In addition, under the condition of a low-precision map, accurate identification of the structure of the waiting area road can help guide autonomous vehicles to drive safely at road junctions, reducing risks of traffic violations and accidents caused by incorrect identification of road structures. By extracting road semantic information from lightweight data uploaded by historical vehicles, the lack of detail in low-precision maps can be compensated for, providing more reliable driving guidance for vehicles. Accurate construction of the waiting area road structure information helps vehicles plan their turning paths in advance, further improving driving smoothness and experience.

The above-mentioned historical vehicle refers to a vehicle that has traveled through some road sections or road junctions of an autonomous driving navigation route (hereinafter referred to as the waiting area road) of the target vehicle and uploaded lightweight data to the cloud, before the target vehicle enables the autonomous driving function. The historical vehicles may be other vehicles or the target vehicle. If the target vehicle has travelled on the waiting area road, the data uploaded by the historical vehicle may be data uploaded to the cloud server by the target vehicle after its travelling. In an autonomous driving and intelligent transportation system, the lightweight data uploaded by the historical vehicles is a key source of information for analyzing road conditions, identifying traffic signs, and constructing road structure models. The data uploaded by historical vehicles can be used not only for route planning and navigation of the target vehicle, but also for providing future vehicles with prior information about the road, ensuring more accurate and safer travelling of subsequent vehicles.

Specifically, during travelling, the historical vehicles may upload road information and obstacle information. The road information includes but is not limited to lane lines, road signs, traffic lights, street signs, etc., and the obstacle information includes but is not limited to static obstacles (such as buildings, barricades, etc.) and moving obstacles (such as moving vehicles, pedestrians, etc.). The acquisition of historical vehicle uploaded data typically relies on a data exchange mechanism established between the historical vehicles and the cloud server. During travelling, the historical vehicles collect road environment information of surroundings of roads they are passing through by means of in-vehicle cameras, radars, lidar and other in-vehicle sensors. The historical vehicles then upload the collected information to the cloud server at an appropriate time. For example, the data may be uploaded to the cloud at night when users are not using the vehicles. For example, the road environment information that the historical vehicle acquires through an in-vehicle sensor when passing through the waiting area road may include but not limited to lane lines, a stop line, a pedestrian crossing, traffic signs and signal lights, road layout, etc. Among them, the lane lines mainly involve types of road markings (such as solid lines, dotted lines), positions of the road markings, and road directions; the stop line indicates a line for a vehicle to stop behind, usually near the pedestrian crossing; the pedestrian crossing involves the position and shape of a pedestrian crossing area; the traffic signs and signal lights involve traffic rule indications at the road junction, including speed limits, direction indications, etc.; and the road layout involves the type of the road junction (for example, T-shaped, cross-shaped), branch lanes, etc. The above information is collected by a sensor on the historical vehicle, processed and analyzed by an in-vehicle computer to generate key semantic features, and then uploaded to the cloud for subsequent analysis and application.

The above historical vehicle uploaded data includes road junction semantic information corresponding to the waiting area road and historical vehicle travelling trajectories uploaded by historical vehicles. Specifically, the road junction semantic information corresponding to the waiting area road is extracted from road environment information captured by in-vehicle sensors of the historical vehicles when the historical vehicles travel on the turn waiting area road and the straight-through waiting area road. The road junction semantic information at least includes a first stop line, a pedestrian crossing, two branch lane lines, and a second stop line. The first stop line is close to the pedestrian crossing and is a stop line along a navigation route before passing through the pedestrian crossing. The second stop line is a stop line along the navigation route after passing through the pedestrian crossing and is located on the turn waiting area road or on the straight-through waiting area road. The historical vehicle travelling trajectories record travelling paths of the vehicles on the road, and usually include position coordinates, driving directions, and other information of the historical vehicles. Specifically, the position coordinates may be positioning data provided by Global Positioning System (GPS) or the BeiDou Navigation Satellite System (BDS), or results of precise positioning based on data acquired by the in-vehicle sensors, which will not be listed herein in detail.

As an example, the historical vehicles may directly filter the road environment information collected by their in-vehicle sensors to obtain the road junction semantic information corresponding to the waiting area road, and then upload the road junction semantic information corresponding to the waiting area road and the historical vehicle travelling trajectories together to the cloud server. This, on the one hand, reduces delay of data transmission and processing so that the cloud server can promptly obtain the latest road junction semantic information, and on the other hand, significantly decreases the amount of transmitted data by uploading the lightweight road junction semantic information, effectively reducing the cost of data transmission and bandwidth requirements, and making it possible to effectively perform the method in the embodiments of the present disclosure even under the condition of a low bandwidth or unstable network.

As an example, after the historical vehicle uploaded data is acquired, the large amount of historical vehicles uploaded data is preprocessed first, including but not limited to format standardization, noise removal, and data calibration, to ensure that the data to be processed is of high quality and consistency. Preferably, road junction semantic information with good timeliness is selected from the historical vehicle uploaded data. For example, it is preferred that road junction semantic information containing clear waiting area lane lines be selected. Decision-making based on outdated data may lead to a lag effect where road condition information obtained has a time delay compared to actual road conditions, which affects driving safety and user experience. It is therefore preferred that the most recent road junction semantic information be selected to accurately reflect the current actual condition of the waiting area road, which can further improve the response speed and safety performance of the autonomous driving system.

As an example, information from multiple data sources is merged and subjected to cross-verification and consistency checking, to ensure accuracy of the extracted road junction semantic information. In the case that the data uploaded by the historical vehicles were collected at different time points or collected from different perspectives, this merging may further improve integrity and accuracy of the information. Filtering criteria and algorithms may be continuously optimized to obtain more accurate road junction semantic information. For example, a threshold may be set to exclude noise or abnormal data, and machine learning algorithms may be used to automatically identify and select high-quality data. Selected data with richer road elements can not only provide a more solid foundation for automatic construction of the waiting area road structure, but also help the autonomous driving system better understand and adapt to the complex road junction environment, improving driving safety and efficiency. By way of such filtering and optimization, accuracy and completeness of the road junction semantic information may be ensured, and a high-quality reference basis may be provided for subsequent construction of the waiting area road structure and autonomous driving decision-making.

After the road junction semantic information corresponding to the waiting area road is acquired, waiting area road structure information may be generated based on the road junction semantic information and the historical vehicle travelling trajectories. The waiting area road structure information provides the autonomous driving system with a detailed structural description of the road junction having a waiting area, and is also the basis for route planning and decision-making by the target vehicle. The waiting area road structure information may be used at the vehicle end to plan in advance an optimal travelling route through a complex road junction. This includes determining when to slow down, when to turn, when to wait, etc., to ensure driving safety and smoothness. In existing technologies, real-time vehicle sensing data may be used to identify key elements of traffic signs near a road junction having a waiting area to allow for real-time reconstruction and updates of waiting area road structure information. However, key elements of traffic signs are often misjudged, missed, or incompletely perceived in real-time at the vehicle end, due to factors such as limited real-time sensing range, blocking by vehicles, and interference from guiding lines. This leads to errors and delays in recognizing waiting area road structure. As a result, a vehicle in assisted driving mode may fail to pass through the road junction as expected, and in severe cases, collisions may occur. In this technical solution, the waiting area road structure information is acquired in advance, which can help reduce dependence of the target vehicle on real-time sensing technology when the target vehicle approaches the road junction having the waiting area, thus reducing driving risks caused by incompleteness or errors of real-time sensing information. Even in low visibility or complex road conditions, the target vehicle is still capable of making accurate judgments based on prior information. Key elements in the waiting area road structure information may be used as a positioning reference to help the vehicle more accurately determine its position on the road, which further improves the autonomous driving experience.

Navigation information about the above waiting area road may contain detailed operating guidelines for the target vehicle to pass through the road junction area, such as turning suggestions, driving speeds, areas to avoid, etc., so as to provide clear guidance to the driver or the autonomous driving system to ensure passage through the road junction in a ruled and safe manner. The waiting area road navigation information may also help warn the driver or the autonomous driving system in advance about presence and entry conditions of the waiting area road junction. For example, when the vehicle approaches the waiting area in the road junction, a prompt for slowing down or preparing to turn may be issued. Based on an in-depth understanding of the structure of the road junction, the waiting area road navigation information may help the target vehicle optimize its driving strategy, such as adjusting timing of acceleration and deceleration, ensuring that it turns at a correct position, etc., so as to improve driving efficiency and reduce unnecessary waiting and travelling time. In relevant technologies, a navigation route provided for passing through a road junction is only a right-angle turn which merely marks the turn, rather than a reasonable passage path at the road junction. The waiting area road navigation information generated in the embodiments of the present disclosure not only indicates changes to be made in driving directions but also can provide accurate suggestions on turning time and turning angle based on specific layout of the waiting area. For example, at a complex road junction, the driver may be informed in advance of when to start turning and a specific turning angle, to avoid unsafe or non-compliant driving caused by a blind turn. By way of analyzing historical travelling trajectories, a smoothest turning path may also be predicated and recommended to avoid a sharp turn or turning at an inappropriate position, to thereby reduce impacts on other traffic participants.

To sum up, the waiting area road structure information is mainly used to construct a decision-making logic framework for the vehicle to pass through a complex road junction, and the waiting area road navigation information focuses on providing specific operation guidance and safety tips during actual driving. The two can work together to ensure safe and efficient passage of the target vehicle through the road junction having the waiting area.

For example, in an autonomous driving mode, control of travelling of the target vehicle relies mainly on the autonomous driving system, and therefore the waiting area road structure information is of critical importance to the autonomous driving system. By combining the road junction semantic information with the historical vehicle travelling trajectories, a waiting area road with details may be constructed, which assists the autonomous driving system in accurately understanding and predicting occupancy/traffic in the waiting area, including when it is safe to enter the waiting area, how to act based on the status of the traffic lights, and how to avoid collisions with other vehicles or pedestrians. The waiting area road structure information may also help optimize route planning to ensure that the vehicle can follow the best driving strategy at a complex road junction, thereby improving safety and user experience of autonomous driving.

For another example, in a mode where the driver drives the vehicle, the driver is mainly responsible for driving the target vehicle, in which case the waiting area road structure information and the waiting area road navigation information may provide strong support for the driver. Based on the road junction semantic information and the historical vehicle travelling trajectories, a clear description of layout of the road junction may be provided, including the range of the waiting area, directions of lane lines, specific positions of stop lines, distribution of pedestrian crossings, and any special road signs. The waiting area road navigation information may further provide reminders about traffic rules, recommend travelling routes, potential traffic jam alerts, and suggestions on best time to turn. For the driver, the waiting area road structure information and the waiting area road navigation information can enhance his/her understanding of road conditions and help predict traffic conditions, thus helping make safer and more efficient driving decisions. The waiting area road navigation information may be conveyed to the driver by means of the vehicle's navigation system, dashboard display, voice prompts and so on, to ensure timeliness and ease of use of the information.

When the position information and/or the navigation route information reported by the target vehicle is received, the waiting area road structure information and/or the waiting area road navigation information may be transmitted to the target vehicle to allow the target vehicle to display the waiting area road structure information and/or the waiting area road navigation information. Specifically, after receiving the real-time position information and the navigation route information of the target vehicle, the cloud server searches for relevant waiting area road structure information and waiting area road navigation information that match the current position and destination of the target vehicle, to ensure that the information transmitted is the waiting area road structure information and/or the waiting area road navigation information of the road junction to be traversed by the target vehicle.

As an example, to ensure that waiting area road structure information is correctly parsed by the target vehicle, the cloud server may convert the waiting area road structure information into data in a format understandable by the target vehicle, such as standard navigation data packets or specific in-vehicle system protocol data, which is convenient for quick consumption and display on the vehicle end.

After the target vehicle receives the waiting area road structure information transmitted by the cloud server, an in-vehicle display system displays the waiting area road structure information to the driver in a visualized way, for example, displaying detailed layout of the road junction, waiting area lanes and guide arrows, positions of stop lines, etc. on an in-vehicle navigation screen. At the same time, the autonomous driving system makes real-time route planning and decision-making based on the received information to ensure that the target vehicle passes safely through the road junction following an expected route. In this way, the target vehicle can obtain in advance accurate information about complex road junctions, which, by either providing drivers with visualized driving guidance or providing a decision-making basis for autonomous driving systems, greatly improves safety and efficiency for vehicles to pass through road junctions having a waiting area.

As an example, the cloud server may also continuously monitor updated information about the waiting area road, such as road work, traffic rule changes, etc., and timely update the structure information and the navigation information. Once new information is generated, the new information will be immediately sent to the target vehicle through a vehicle-cloud communication system, to allow the target vehicle to timely respond to road changes. After consuming the information, the target vehicle may feed back new situations encountered during its actual travelling process to the cloud, thus forming a closed loop of information and further optimizing cloud services. This dynamic update mechanism on the cloud end ensures timeliness and accuracy of the information so that the information keeps effective in constantly changing traffic environments.

In the above steps S11 to S13, the historical vehicle uploaded data is acquired, which includes road junction semantic information corresponding to waiting area roads and historical vehicle travelling trajectories uploaded by historical vehicles. Then, the waiting area road structure information is generated based on the road junction semantic information and the historical vehicle travelling trajectories. Finally, in response to receiving the position information and/or the navigation route information reported by the target vehicle, the waiting area road structure information is transmitted to the target vehicle, so that the target vehicle displays the waiting area road structure information. This helps the target vehicle better understand the situation of the waiting area road, thereby improving driving safety and passing efficiency through the road junction. Furthermore, transmitting the waiting area road structure information to the target vehicle for display can effectively improve capabilities of the autonomous driving system to recognize and plan the waiting area road, reducing complexity of real-time sensing and optimizing driving experience. The method for constructing a waiting area road in a map provided by the embodiments of the present disclosure improves efficiency and accuracy of identifying a waiting area road at a road junction area, reduces computing load, optimizes driving experience, and thus solves the technical problems of low efficiency and poor accuracy in identifying a waiting area road at a road junction area.

It should be noted that the method for constructing a waiting area road involved in the embodiments of the present disclosure may be implemented mainly by the cloud server or by the target vehicle. This flexibility in its implementation mode allows intelligent transportation systems and the autonomous driving technology to be able to better adapt to various road conditions and communication environments, thereby providing users with more reliable, efficient and safe driving experience.

In an example, the method is implemented by the cloud server interacting with the target vehicle. The cloud server, generally having richer computing resources and more powerful data processing capabilities, can simultaneously process a large amount of data received from multiple vehicles and perform complex algorithm operations and data analysis, and thus can construct more accurate waiting area road structure information. By aggregating the information uploaded by multiple historical vehicles, the cloud server can obtain more comprehensive road junction semantic information, which enables construction of a more accurate road structure model. Meanwhile, the cloud is capable of quickly updating and adjusting map data to ensure that all vehicles receive the most recent road information. In addition, construction and updating the waiting area road structure information by the cloud helps reduce data storage requirements and computing load on each vehicle and is also conducive to unified maintenance and management of the data. The implementation by the cloud server interacting with the target vehicle may be specifically used in areas with good high-precision map coverage and real-time communication environments, such as urban centers or highways, or fleet operation scenarios that require global map update and management, such as taxis or shared car services.

The following further introduces the method for constructing a waiting area road in a map according to the embodiments of the present disclosure.

In an optional embodiment, the road junction semantic information includes: a first stop line, a second stop line, a pedestrian crossing area, and candidate branch lane lines. The first stop line represents a stop line of a straight-through lane corresponding to the waiting area road, and the second stop line represents a stop line associated with the candidate branch lane lines.

A left-turn waiting area road is taken here as an example. Fig. 2 is a schematic diagram showing the road junction semantic information according to an embodiment of the present disclosure. As shown in Fig. 2, at a road junction having a left-turn waiting area, the first stop line is the stop line of the through lane corresponding to the waiting area road, which is located at the end of the through lane. When a red light signal is showing, straight-head and left-turn vehicles must stop behind this line. The first stop line usually consists of a conspicuous solid line sign to ensure that the driver clearly knows where to stop.

The second stop line is a stop line associated with the candidate branch lane lines. A historical vehicle may enter the left-turn waiting area after passing through the pedestrian crossing area from the straight lane of the left-turn waiting area road. The candidate branch lane lines in Fig. 2 may be lane lines defining left and right boundaries of the left-turn waiting area. The second stop line is located at the end of the left-turn waiting area road. Usually, when the signal light for the through lane is red and the signal light for the left-turn lane shows a specific left-turn waiting indicator (such as a flashing arrow or text), a left-turn vehicle may cross the first stop line and the pedestrian crossing area, enter the left-turn waiting area, stop behind the second stop line and wait until the left-turn signal turns green.

In an optional embodiment, step S12 of generating the waiting area road structure information based on the road junction semantic information and the at least one historical vehicle travelling trajectory includes the following sub-steps.

In step S121, filtering processing is performed on the historical vehicle uploaded data to obtain the first stop line and the pedestrian crossing area.

In step S122, lane lines within a preset range of the first stop line are searched for based on the first stop line and the pedestrian crossing area to obtain a lane line search result and a stop line search result.

In step S123, filtering processing is performed on the lane line search result and the stop line search result to obtain waiting area lane lines.

In step S124, filtering processing is performed on the waiting area lane lines based on the at least one historical vehicle travelling trajectory to obtain candidate branch lane lines.

In step S125, at least one target waiting area is determined based on the candidate branch lane lines.

In step S126, the waiting area road structure information is generated based on the at least one target waiting area.

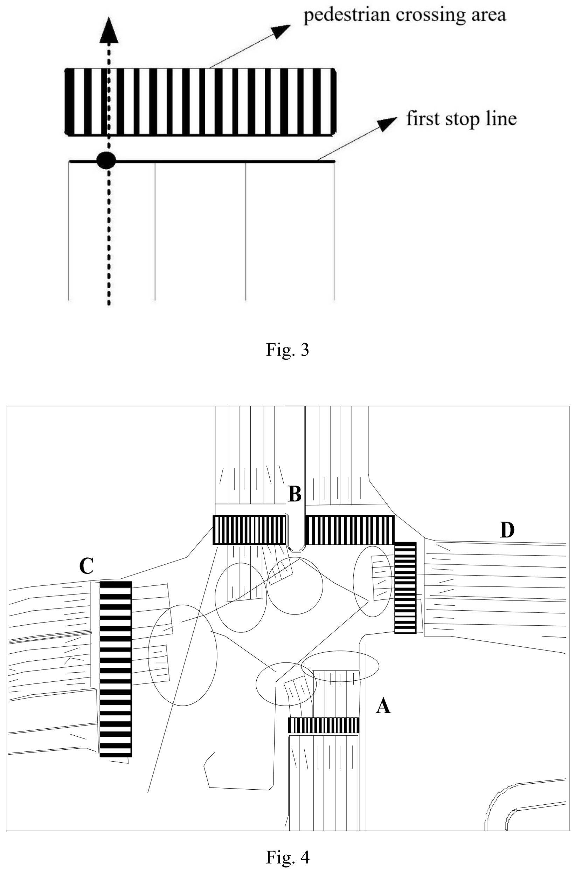

Fig. 3 is a schematic diagram of a road junction area according to an embodiment of the present disclosure. As shown in Fig. 3, the first stop line and the pedestrian crossing area are obtained by filtering the historical vehicle uploaded data, to ensure that the first stop line and the historical vehicle travelling trajectories are close to each other or intersect with each other for the first time. For example, for a first stop line, a line may be identified using edge detection algorithms or feature matching algorithms; and for a pedestrian crossing area, specific textures or patterns, such as black and white stripes of zebra crossings, may be searched for.

Fig. 4 is a schematic diagram of another road junction area according to an embodiment of the present disclosure. As shown in Fig. 4, this road junction is a crossroad, including roads in four directions A, B, C, D of the road junction. Each of the roads usually consists of multiple lanes, including a through lane, a left-turn lane, and a right-turn lane, and some of the roads may also include a bus lane, a bicycle lane, and a sidewalk. After the historical vehicle uploaded data is filtered to obtain the first stop line and the pedestrian crossing area, all lane lines and stop lines are searched for within a preset range ahead of and on both sides of the first stop line. For example, in the process of searching for lane lines, lane lines may be detected and identified from image data or radar point cloud data uploaded by the historical vehicles. During the identifying process, types of the lane lines (solid lines, dashed lines), directions and continuity of the lane lines need to be considered. In the process of searching for stop lines, the searching is usually conducted based on geometry, position, and directions of lines, ensuring that detected stop lines are geometrically consistent with the identified first stop line. Taking the road in direction A of the road junction as an example, searching is carried out within the preset area ahead of and on both sides of the first stop line, and lines obtained from the searching include all lane lines and stop lines on the road in direction B which is opposite the road in direction A, all lane lines and stop lines on the road in direction C which in a left-turn direction of the road in direction A, all lane lines and stop lines on the road in direction D which is in a right-turn direction of the road in direction A, as well as long slash lines in the crossroad.

Further, the lane line search result and the stop line search result is filtered to obtain waiting area lane lines which include turn waiting area lane lines and straight-through waiting area lane lines of a same road. Continuing with Fig. 4 as an example, the lane line search result and the stop line search result for the road in direction A are processed to filter out lane lines of roads in directions B, C and D, retaining lane lines of the left-turn and straight-through waiting areas on the road in direction A.

Further, the waiting area lane lines are filtered based on the historical vehicle travelling trajectories to obtain the candidate branch lane lines. The candidate branch lane lines may be left-turn waiting area lane lines or straight-through waiting area lane lines. In an optional embodiment, filtering processing is performed on the waiting area lane lines are based on turning trajectories of the historical vehicles, to filter out the straight-through waiting area lane lines, obtaining candidate branch lane lines which turn left to the road in direction C. These candidate branch lane lines match the turning trajectories. In another optional embodiment, filtering processing is performed on the waiting area lane lines based on straight-through travelling trajectories of the historical vehicles, to filter out the turn waiting area lane lines, obtaining candidate branch lane lines which go straight to the road in direction B. These candidate branch lane lines match the straight-through travelling trajectories.

At least one target waiting area is determined based on the candidate branch lane lines. That is, the candidate branch lane lines matching the turning travelling trajectories may be used to determine at least one waiting area lane. For example, in a wide road junction area there may be side-by-side waiting area roads, and in a narrow road junction area there may be only one waiting area road.

The waiting area road structure information is then generated based on the at least one target waiting area. After determining at least one target waiting area, the waiting area road structure information is obtained by extracting information from the at least one target waiting area. The waiting area road structure information may include only structure information of the waiting area road corresponding to the lane where the vehicle is located, or it may include structure information of all waiting area roads parallel to the waiting area road corresponding to the lane where the vehicle is located.

In an optional embodiment, step S124 of performing filtering processing on the waiting area lane lines based on the historical vehicle travelling trajectories to obtain the candidate branch lane lines includes the following sub-steps.

In step S1241, direction-based filtering is performed on the waiting area lane lines based on a preset direction condition to obtain a direction filtering result. The preset direction condition is used to select waiting area lane lines having a direction consistent with the historical vehicle travelling trajectories.

In step S1242, position-based filtering is performed on the direction filtering result based on a second position condition to obtain the candidate branch lane lines. The second position condition is used to select waiting area lane lines that match the positions of the historical vehicle travelling trajectories.

Specifically, direction-based filtering is performed on the waiting area lane lines based on the preset direction condition to filter out waiting area lane lines whose direction is inconsistent with a travel direction of the historical vehicle travelling trajectories. Waiting area lane lines having a direction consistent with the travel direction of the historical vehicle travelling trajectories are retained as the direction filtering result. Further, position-based filtering is performed on the direction filtering result based on the second position condition, by way of which waiting area lane lines geometrically closest to the historical vehicle travelling trajectories (i.e., waiting area lane lines that meets the second position condition) are retained and determined as the candidate branch lane lines.

In the above optional embodiment, direction-based filtering of the waiting area lane lines is performed based on the preset direction condition to obtain the direction filtering result, and then position-based filtering of the direction filtering result is performed based on the second position condition to obtain the candidate branch lane lines. Through such direction-based and position-based double filtering, precise matching of the candidate branch lane lines is achieved, which, in addition to optimizing driving experience, not only enhances decision-making reliability of autonomous vehicles at road junctions but also ensures driving safety and efficiency.

In the above optional embodiment, by filtering the historical vehicle uploaded data, the first stop line and the pedestrian crossing area may be accurately identified and located. The lane line layout within the preset range of the first stop line may be then deeply analyzed to accurately obtain the lane line search result and the stop line search result. The lane line search result and the stop line search result are then filtered to obtain the waiting area lane lines, and the waiting area lane lines are filtered based on the historical vehicle travelling trajectories to obtain the candidate branch lane lines. After that, at least one target waiting area is determined based on the candidate branch lane lines, and finally the waiting area road structure information is generated based on the at least one target waiting area. This effectively overcomes the problems of insufficient coverage of high-precision maps and limitations of real-time sensing, provides robust and reliable road information support for actual application of autonomous driving technology, allows for higher-level accuracy and flexibility especially in decision-making for driving through a waiting area lane, and greatly enhances intelligent performance and safety of vehicles when passing through road junctions.

In an optional embodiment, step S123 of performing filtering processing on the lane line search result and the stop line search result to obtain waiting area lane lines includes the following sub-steps.

In step S1231, a second stop line is determined based on the first stop line associated with the stop line search result.

In step S1232, in response to the second stop line and the lane line search result satisfying a first position condition, association processing is performed on the second stop line and the lane line search result to obtain an association pair result. The first position condition represents an association and snapping condition between the second stop line and the lane line search result.

In step S1233, the waiting area lane lines are constructed using the association pair result.

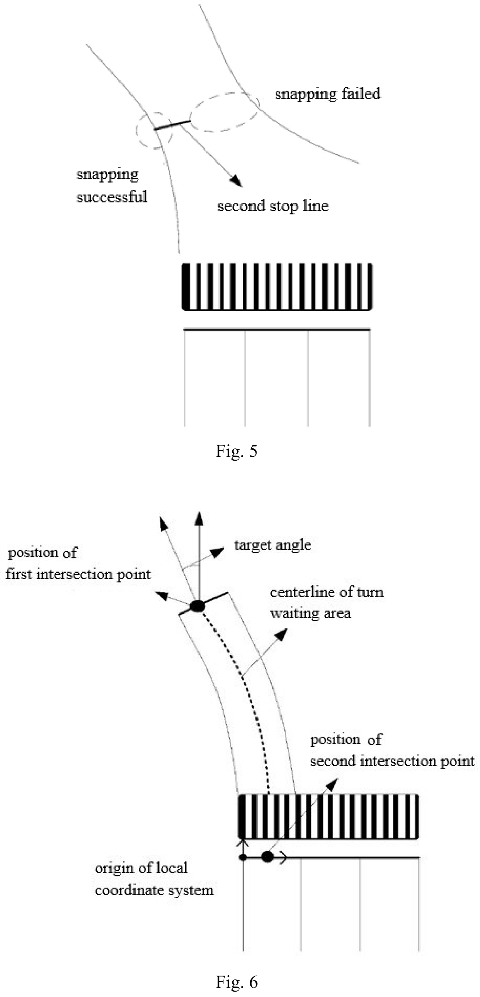

Specifically, a second stop line ahead of the first stop line along a navigation direction is searched for, and the second stop line is associated with and snapped to the lane line search result. Fig. 5 is a schematic diagram showing an associating and snapping process according to an embodiment of the present disclosure. As shown in Fig. 5, when in the lane line search result there is a point whose length of projection on the second stop line is less than 2.5 meters, it is determined that the second stop line and the lane line search result meet the association snapping condition, in which case the second stop line and the lane line search result may be successfully snapped to each other, with a snap point therebetween located on the second stop line or an extension line of the second stop line. The association and pair result is thus obtained. When in the lane line search result there is no such point whose length of projection on the second stop line is less than 2.5 meters, it is determined that the second stop line and the lane line search result do not meet the association snapping condition, in which case the second stop line and the lane line search result cannot be successfully snapped to each other, and the lane line search result is thus discarded. The waiting area lane lines marked by the circles in Fig. 4 may be constructed using the association and pairing result.

In the above optional embodiment, the second stop line is determined based on the first stop line associated with the stop line search result. Then, in response to the second stop line and the lane line search result satisfying the first position condition, the second stop line is associated with the lane line search result to obtain the association pair result. Finally, the waiting area lane lines are constructed using the association pair result. This can significantly improve positioning accuracy, decision-making reliability and driving efficiency of the autonomous vehicle when travelling at road junctions.

In an optional embodiment, the waiting area road structure information includes a first intersection position and a waiting area centerline. The first intersection position represents the position of the intersection between the historical vehicle travelling trajectory and the second stop line. The waiting area centerline represents a lane centerline corresponding to the target waiting area.

Specifically, the first intersection position may mark an exact position where a historical vehicle left the target waiting area, providing clear coordinates of an end point of the travelling path for the target vehicle, which helps the target vehicle to determine when and from which point to leave the target waiting area. The first intersection position may serve as an important basis for the autonomous driving system to make turning, straight-going or stopping decisions, ensuring that the target vehicle accurately performs driving actions in accordance with traffic rules when passing through the road junction to avoid violations such as running red lights or making wrong turns. The first intersection position may also be used to predict movement paths of other vehicles or pedestrians, helping to identify potential traffic conflict points in advance, and thus providing safety warnings for the autonomous vehicle and ensuring driving safety.

The waiting area centerline is a virtual lane line in the target waiting area, which may indicate an optimal travelling path for the target vehicle in the target waiting area, helping the target vehicle to stay in the center of the lane and avoid deviation or collision. The waiting area centerline is crucial for determining a turning point. The autonomous vehicle may determine when to start turning based on its position relative to the centerline to ensure smooth and safe turning. The waiting area centerline may also serve as a reference line for the target vehicle to maintain a safe distance from a vehicle in front and as a basis for speed adjustment, especially in high-density traffic flow, to ensure safe and efficient passage of the vehicle through the road junction. The waiting area centerline is an important input to a vehicle path planning algorithm and can help the system to predict a travelling trajectory for the target vehicle in the target waiting area and enable dynamic path planning to adapt to real-time traffic conditions.

In the above optional embodiment, based on the first intersection position and the waiting area centerline in a local coordinate system, the autonomous vehicle is able to locate its position in the road junction and understand the layout and traffic rules of the road junction more accurately, and further make safer, more efficient and compliant driving decisions.

In an optional embodiment, the waiting area road structure information also includes a second intersection position, a target angle, and a target distance. The second intersection position represents the position of an intersection between the historical vehicle travelling trajectory and the first stop line. The target angle represents an angle between a first normal direction of the first stop line and a second normal direction of the second stop line. The target distance represents a distance between the first intersection position and the second intersection position.

Optionally, the first stop line and the second stop line may be parallel to each other, in which case the target angle is 0°.

The second intersection position may help the autonomous driving system to adjust the status of the vehicle in advance, such as speed adjustment, turning prediction, etc., to ensure that the vehicle smoothly enters the target waiting area. The second intersection position, as a reference point for path planning, ensures that the autonomous vehicle accurately aligns with an entrance to the waiting area, thus preventing the vehicle from deviating from a correct travelling route in a complex traffic environment.

The target angle provides quantitative information on a direction change from the first stop line to the second stop line. For the autonomous vehicle, the target angle is a key basis for adjusting the travelling direction and can help ensure that the vehicle correctly aligns with an exit direction when travelling in the waiting area. The size of the target angle may reflect the complexity of the road junction. A large angle means that the target vehicle needs to make a large turn, which increases potential points of conflict with other road users. The target angle may therefore be used to assess risks in passing through the road junction and assist the vehicle in making safer driving decisions.

The target distance, which is the distance from the first intersection position to the second intersection position, is crucial for the autonomous vehicle to estimate the length of the travelling path and the arrival time at the next critical point. It also helps the vehicle prepare for acceleration or deceleration in advance. The target distance may also help the target vehicle to determine a safe distance from a vehicle in front. Especially in high-density traffic scenarios, the target vehicle may adjust its speed depending on the target distance to avoid rear-end collisions or collisions caused by improper distance judgment.

In the above optional embodiment, the second intersection position, the target angle, and the target distance complement structural features of the target waiting area and provide the autonomous vehicle with precise navigation information required to enter, pass through and exit the waiting area. This not only helps achieve smoother and safer travelling of the vehicle, but also improves efficiency of passing through the road junction and reduces driving errors caused by misunderstanding of the road structure. The overall driving experience is thus optimized, and traffic safety of vehicles and pedestrians is ensured.

Fig. 6 is a schematic diagram showing the waiting area road structure information according to an embodiment of the present disclosure. As shown in Fig. 6, the origin of the local coordinate system is the intersection between the first stop line and the leftmost lane line at the road junction. All coordinate geometry information in the waiting area road structure information is described under the local coordinate system.

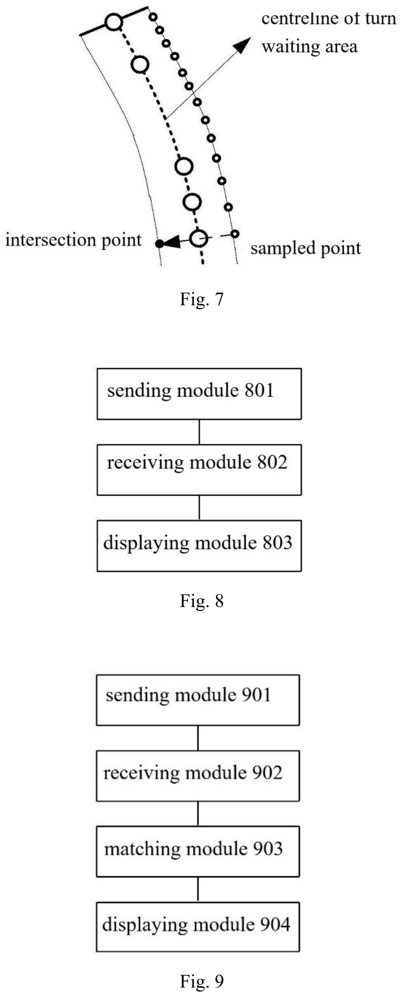

Fig. 7 is a schematic diagram showing a process of generating the waiting area centerline according to an embodiment of the present disclosure. As shown in Fig. 7, discrete points are sampled at equal intervals on the right lane line of the target waiting area. For each of the sampled points, a line segment extending to the left in a normal direction intersects with the left lane line of the target waiting area, resulting in an intersection point. A mean point between each of the sampled points and a corresponding intersection point is taken as a point on the waiting area centerline, and the waiting area centerline is thus constructed by using a plurality of such points. If there is still a distance between the constructed waiting area centerline and the second stop line, the constructed waiting area centerline is extended, along a direction thereof, to the second stop line.

Before reaching the road junction with the waiting area, the target vehicle uses the waiting area road structure information as prior information, and it determines, via real-time sensing, the real-time position of the origin of the local coordinate system (in the waiting area road structure information) in its own vehicle coordinate system. In this way, the waiting area road structure information is mapped to the vehicle coordinate system through coordinate conversion. After the conversion, the position information of the waiting area centerline is directly used by the vehicle end, and serves as a key reference for constructing the topological structure of the waiting area road in real time on the vehicle end. On the vehicle end, the lane ahead of the road junction is extended forward along the waiting area centerline until it reaches the end of the second stop line, at which point the construction of the waiting area road structure is completed on the vehicle end. In downstream planning and decision-making, it is only necessary to enable the vehicle to determine the status of the traffic lights at the road junction and travel along the waiting area centerline, and driving experience of the vehicle at the road junction can thus be ensured.

In an optional embodiment, step S13 of distributing the waiting area road structure information to the target vehicle includes: determining, based on the received position information and navigation route information of the target vehicle, whether a waiting area road structure is present at a road junction to be traversed along the navigation route, the road junction being within a preset distance from the position information; and if a waiting area road structure is present at the road junction to be traversed, sending the waiting area road structure information corresponding to the road junction to be traversed to the target vehicle.

Specifically, in the above described process of distributing the data, the target vehicle needs to upload the position information and the navigation route information to the cloud server at the same time. In the cloud server, matching is performed between the information position and the navigation route information uploaded by the target vehicle to determine a specific position of the vehicle on the navigation route. In the matching process, in-vehicle GPS and the driving status information of the vehicle (such as speed and direction) may be used to ensure accuracy of the position. Further, in determining whether, on the navigation route within a preset distance from the position, a waiting area road structure exists at a road junction to be traversed, the driving speed of the target vehicle and complexity of the road junction needs to be taken into consideration for setting the preset distance, to ensure that the target vehicle can timely receive relevant information and make corresponding responses.

Whether the road junction to be traversed by the target vehicle has a waiting area road structure is determined using the waiting area road structure information previously generated in the cloud server. If it is determined that the road junction to be traversed has a waiting area road structure, this waiting area road structure information will be distributed timely to the target vehicle. This ensures that the target vehicle can receive necessary road structure information and operational guidelines when approaching or reaching a road junction with a waiting area, thereby improving safety and efficiency of passing through the road junction, no matter the information is processed by the autonomous driving system or used as a reference for the driver.

Delays happen in data transmission, especially in the case of an unstable communication network or high communication volume. Limiting the range of the information distributed each time to the preset distance may help reduce the size of data packets, accelerate information transmission, and reduce impacts of communication delay on real-time operations of the vehicle. This is especially important for autonomous vehicles requiring real-time adjustment of their travelling paths and ensures that the system can timely receive key information for dealing with a road junction ahead and respond quickly.

In addition, in a dynamically changing traffic environment, road conditions (such as construction, accidents, changes in traffic rules, etc.) may change at any time. Frequent updating of waiting area road structure information within the preset distance allows the target vehicle to timely receive the most recent road condition information and adjust its driving strategy to respond to emergencies, which enhances adaptability and safety of the vehicle in complex environments.

For example, after the target vehicle uploads the position information and the navigation route information to the cloud server at the same time, the cloud server determines whether a waiting area road structure exists at a road junction to be traversed within 100 meters from the position on the navigation route. When the road junction to be traversed within 100 meters from the position on the navigation route has a waiting area road structure, the cloud server may distribute the waiting area road structure information corresponding to this road junction to the target vehicle. A 100-meter range is usually sufficient to cover the road junction that the target vehicle is about to encounter, which is especially true in urban driving environments. Distributing the waiting area road structure information from 100 meters away in advance allows the target vehicle to know in advance layout and rules of a complex road junction ahead and make safer and prompt driving decisions.

In an optional embodiment, step S13 of distributing the waiting area road structure information to the target vehicle includes: acquiring, based on the navigation route information, waiting area road structure information corresponding to the navigation route; and distributing all the waiting area road structure information corresponding to the navigation route to the target vehicle, such that the target vehicle finds a corresponding piece of waiting area road structure information that matches its position information.

Specifically, in the above process of distributing the data, after the target vehicle uploads the navigation route information to the cloud server, the cloud server may parse the navigation route information to identify all possible road junctions having a waiting area on the entire route. For example, the cloud server can compare the navigation route with high-precision map data to identify specific road junction signs and waiting area features to quickly determine road junctions having a waiting area along the navigation route. Further, pieces of waiting area road structure information corresponding to all the road junctions having a waiting area on the navigation route is acquired, and all pieces of the waiting area road structure information corresponding to the navigation route is distributed to the target vehicle.

Unlike distributing the information in segments multiple times, the cloud server distributes all waiting area road the structure information items corresponding to the entire navigation route to the target vehicle at once. This enables the vehicle to have complete key road information, even if communication is degraded or lost, thereby improving robustness of the system and autonomous driving capability of the vehicle. After receiving all the waiting area road structure information distributed by the cloud, the target vehicle performs matching between its real-time position information and the received information. Through the matching, the target vehicle can determine when, where, and how to safely pass through the road junction having the waiting area.

In addition, the one-time distribution of all pieces of the waiting area road structure information corresponding to the navigation route may also help reduce needs of frequent communication between the target vehicle and the cloud server, thereby reducing impacts of communication delays on driving experience. Furthermore, complete road information gives the vehicle a wider field of view, allowing it to consider more factors when planning travelling routes, such as avoidance of congestion and optimization of turning timing, to travel in a smoother and more efficient way. In areas with poor communication, such as tunnels, areas under viaducts, or remote areas, communication between the target vehicle and the cloud server may be unstable or completely lost. Receiving all the waiting area road structure information at once allows the target vehicle to make reasonable driving decisions based on the waiting area road structure information received on the vehicle end, even in the case of degraded communication, which helps avoid lack of information caused by communication problems and ensures driving safety and efficiency.

In an optional embodiment, step S13 of distributing the waiting area road structure information to the target vehicle includes: acquiring, based on the navigation route information, waiting area road structure information corresponding to the navigation route; and distributing, based on the position information, the waiting area road structure information corresponding to the navigation route periodically in preset pieces to the target vehicle, such that the target vehicle finds a corresponding piece of waiting area road structure information that matches the position information.

Specifically, in the above process of distributing the data, after the target vehicle uploads the navigation route information to the cloud server, the cloud server parses the navigation route information uploaded by the target vehicle and identifies all road junctions having a waiting area along the navigation route. Subsequently, pieces of waiting area road structure information of these road junctions having a waiting area is extracted from the cloud server. To avoid communication delays and bandwidth occupation caused by transmission of a large amount of data at one time, the cloud server divides the extracted pieces waiting area road structure information into segments, with each segment containing preset pieces of the information. For example, each segment may contain waiting area road structure information of three road junctions. The cloud server then periodically distributes waiting area road structure information of three road junctions to the target vehicle. It should be noted that the time interval for the periodical distribution should be determined in accordance with the driving speed and communication environment of the target vehicle to ensure that the target vehicle can receive relevant waiting area road structure information before approaching a next waiting area.

After receiving the information distributed by the cloud, the target vehicle performs matching between its own real-time position information and the segment of the waiting area road structure information. The target vehicle may pre-load and process information of a waiting area that it is about to arrive, because of which when actually passing through the road junction, the target vehicle has already had complete road semantic information and can therefore make more accurate decisions. This provides necessary support whether it is automatic route planning or driving by the driver.

In addition, the periodical distribution of preset pieces of waiting area road structure information effectively reduces the amount of data transmitted each time and avoids communication bottlenecks that may be caused by one-time transmission of a large amount of information. By periodically updating the waiting area road structure information, the target vehicle can timely obtain the most recent road conditions and traffic rules. If temporary changes (such as new construction areas, traffic control, etc.) occur, the cloud server may immediately update the information and distribute it to the vehicle in a next period, by way of which rapid adjustment of information and dynamic optimization of the route is realized.

It should be noted that user information (including but not limited to user device information, user personal information, etc.) and data (including but not limited to data used for analysis, stored data, displayed data, etc.) involved in the present disclosure are information and data authorized by users or fully authorized by all parties. Besides, collection, use and processing of relevant data needs to comply with relevant laws, regulations and standards of relevant countries and regions, and corresponding operation portals are provided for users to choose to authorize or refuse to authorize.

Through the description of the above embodiments, those of ordinary skill in the art can clearly understand that the methods according to the above embodiments may be implemented by means of software plus necessary general hardware platforms, and may also of course be implemented by means of hardware, but in many cases the former is preferred. Based on such a understanding, the technical solutions of the present disclosure in its essence or the part thereof contributing to the existing technologies may be embodied in the form of a computer software product. This computer software product is stored in a storage medium (such as ROM/RAM, a disk, an optical disc) and includes a number of instructions to allow a terminal device (which may be a mobile phone, a computer, a server, or a network device, etc.) to implement the methods described in the embodiments of the present disclosure.

Fig. 8 is a structural block diagram of a vehicle for constructing a waiting area road in a map according to an embodiment of the present disclosure. As shown in Fig. 8, the vehicle includes a sending module 801, a receiving module 802, and a displaying module 803.

The sending module 801 is configured to send position information and navigation route information of the vehicle to a cloud server.

The receiving module 802 is configured to receive waiting area road structure information distributed by the cloud server. The waiting area road structure information is waiting area road structure information of a road junction to be traversed within a preset distance from the position indicated by the position information.

The displaying module 803 is configured to display the waiting area road structure information on a graphical user interface of the vehicle.

Fig. 9 is a structural block diagram of another vehicle constructing a waiting area road in a map according to an embodiment of the present disclosure. As shown in Fig. 9, the vehicle includes a sending module 901, a receiving module 902, a matching module 903, and a displaying module 904.

The sending module 901 is configured to send navigation route information of the vehicle to a cloud server.

The receiving module 902 is configured to receive all waiting area road structure information corresponding to the navigation route distributed by the cloud server.

The matching module 903 is configured to find, from all the waiting area road structure information, a corresponding piece of waiting area road structure information that matches the position information of the vehicle. The corresponding piece of waiting area road structure information is waiting area road structure information of a road junction to be traversed within a preset distance from the position information.

The displaying module 904 is configured to display, on a graphical user interface of the vehicle, the corresponding piece of waiting area road structure information that matches the position information.

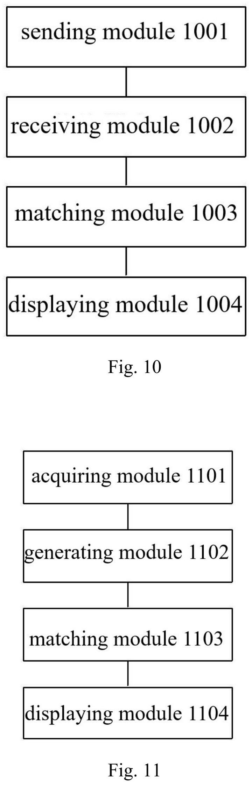

Fig. 10 is a structural block diagram of further another vehicle constructing a waiting area road in a map according to an embodiment of the present disclosure. As shown in Fig. 10, the vehicle includes a sending module 1001, a receiving module 1002, a matching module 1003, and a displaying module 1004.

The sending module 1001 is configured to send position information and navigation route information of the vehicle to a cloud server.

The receiving module 1002 is configured to periodically receive preset pieces of waiting area road structure information distributed by the cloud server. The waiting area road structure information is waiting area road structure information of road junctions to be traversed on the navigation route.

The matching module 1003 is configured to find, from the preset pieces of waiting area road structure information, a corresponding piece of waiting area road structure information that matches the position information of the vehicle. The corresponding piece of waiting area road structure information is waiting area road structure information of a road junction to be traversed within a preset distance from the position information.

The displaying module 1004 is configured to display, on a graphical user interface of the vehicle, the corresponding piece of waiting area road structure information that matches the position information.

Fig. 11 is a structural block diagram of still another vehicle constructing a waiting area road in a map according to an embodiment of the present disclosure. As shown in Fig. 11, the vehicle includes an acquiring module 1101, a generating module 1102, a matching module 1103, and a displaying module 1104.

The acquiring module 1101 is configured to acquire position information and navigation route information of the vehicle and vehicle historical data stored in a storage module. The vehicle historical data includes road junction semantic information corresponding to the waiting area road and at least one historical travelling trajectory.

The generating module 1102 is configured to generate waiting area road structure information based on the road junction semantic information and the at least one historical travelling trajectory.

The matching module 1103 is configured to find a corresponding piece of waiting area road structure information that matches the position information and the navigation route information.

The displaying module 1104 is configured to display the corresponding piece of waiting area road structure information on a graphical user interface of the vehicle.

The above position information may be precise position of the vehicle (including longitude and latitude coordinates) acquired through a satellite navigation system such as GPS or Beidou. The above navigation route information may be a predetermined travelling route obtained from a navigation system of the vehicle. Both are helpful in knowing the road junction to be traversed in advance. The above historical data of the vehicles is road junction semantic information and historical travelling trajectories stored by the vehicles when the vehicles passed through the waiting area road, which may be obtained by reading from the storage module. The historical data of the vehicles may be past travelling records of the target vehicle or shared information from other vehicles, which is not restricted in the embodiments of the present disclosure.

Further, the waiting area road structure information is generated based on the road junction semantic information and the historical travelling trajectories, and then automatic matching may be performed to obtain a corresponding piece of waiting area road structure information that matches the position information and the navigation route information of the vehicle. The matching may be batch matching periodically performed between the position information and the waiting area road structure information of a preset number of road junctions to be traversed, or real-time matching between the position information of the and the waiting area road structure information of a single road junction to be traversed, or one-time matching to obtain the waiting area road structure information of all road junctions to be traversed on the navigation route.

In the embodiments of the present disclosure, when the vehicle constructs a waiting area road on its own, it does not need to wait for the cloud server to distribute data. The vehicle may make real-time judgment on surrounding environments by making use of its own in-vehicle sensors and computing resources and then performs the construction, which is especially suitable for areas with degraded communication or unreliable networks. The independent construction of the waiting area road structure information on the vehicle end helps avoid possible communication delays in data transmission and ensures immediacy in driving decision-making. The ability of vehicles to autonomously identify waiting areas and construct road structures thereof without the support of external information is crucial for the safety and reliability of autonomous vehicles in complex road environments. The method of constructing a waiting area road directly by the target vehicle may be applied specifically to areas with poor communication conditions, such as remote areas, tunnels or areas under viaducts, and may also be used for high-speed lane changes and emergency responses. Direct construction on the vehicle end allows for quick adaptation to changing driving environments and is also suitable for autonomous driving scenarios with high demands for real-time performance and autonomy, such as high-level autonomous driving testing or operations.

Optionally, the road junction semantic information includes a first stop line, a second stop line, a pedestrian crossing area, and candidate branch lane lines. The first stop line represents a stop line of a through lane corresponding to the waiting area road, and the second stop line represents a stop line associated with the candidate branch lane lines.

Optionally, the generating module 1102 also includes: a first filtering unit, configured to perform filtering processing on the vehicle historical data to obtain the first stop line and the pedestrian crossing area; a searching unit, configured to search for lane lines within a preset range of the first stop line based on the first stop line and the pedestrian crossing area to obtain a lane line search result and a stop line search result; a second filtering unit, configured to perform filtering processing on the lane line search result and the stop line search result to obtain waiting area lane lines; a third filtering unit, configured to perform filtering processing on the waiting area lane lines based on the historical travelling trajectories to obtain the candidate branch lane lines; a determining unit, configured to determine at least one target waiting area based on the candidate branch lane lines; and a generating unit, configured to generate the waiting area road structure information based on the at least one target waiting area.

Optionally, the second filtering unit is also configured to: determine a second stop line based on the first stop line associated with the stop line search result; in response to the second stop line and the lane line search result satisfying a first position condition, associate the second stop line with the lane line search result to obtain an association pair result, the first position condition representing an association snapping condition between the second stop line and the lane line search result; and construct the waiting area lane lines using the association pair result.

Optionally, the waiting area road structure information includes a first intersection position and a waiting area centerline. The first intersection position represents a position of an intersection between a historical travelling trajectory and the second stop line. The waiting area centerline represents a lane centerline corresponding to the target waiting area.

Optionally, the waiting area road structure information also includes a second intersection position, a target angle, and a target distance. The second intersection position represents a position of the intersection between a historical travelling trajectory and the first stop line. The target angle represents an angle between a first normal direction of the first stop line and a second normal direction of the second stop line. The target distance represents a distance between the first intersection position and the second intersection position.

Optionally, the matching module 1103 also includes: a determination unit, configured to determine, based on the position information and the navigation route information, whether a waiting area road structure is present at a road junction to be traversed along the navigation route, the road junction being within a preset distance from the position information; and a first matching unit, configured to find, if a waiting area road structure is present at the road junction to be traversed, waiting area road structure information corresponding to the road junction to be traversed that matches the position information.

Optionally, the matching module 1103 also includes: a first acquiring unit, configured to obtain, based on the navigation route information, all waiting area road structure information corresponding to the navigation route; and a second matching unit, configured to find, from all the waiting area road structure information, a corresponding piece of waiting area road structure information that matches the position information. The corresponding piece of waiting area road structure information is waiting area road structure information of a road junction to be traversed within a preset distance from the position.

Optionally, the matching module 1103 also includes: a second acquiring unit, configured to periodically acquire preset pieces of waiting area road structure information corresponding to the navigation route based on the navigation route information; and a third matching unit, configured to find, from the preset pieces of waiting area road structure information corresponding to the navigation route, a corresponding piece of waiting area road structure information that matches the position information. The corresponding piece of waiting area road structure information is waiting area road structure information of a road junction to be traversed within a preset distance from the position.

Optionally, the waiting area road includes at least one of the following: a left-turn waiting area road, a right-turn waiting area road, and a straight-through waiting area road.

It should be noted that the above units and modules may be implemented by software or hardware, and in the case of the latter, the units and modules may be implemented through the following ways but are not limited thereto. The above units and modules are all located in a same processor or located in different processors in any combination.

The embodiments of the present disclosure further provide a cloud server which includes: a memory having an executable program stored thereon; and a processor configured to execute the program. The program, when executed, implements the method in the embodiments of the present disclosure.

The embodiments of the present disclosure further provide a computer-readable storage medium which includes an executable program stored thereon. The executable program, when executed, controls a device in which the computer-readable storage medium is located to implement the method in the embodiments of the present disclosure.

The embodiments of the present disclosure further provide a computer program product which includes a computer program. The computer program, when executed by a process, implements the method in the embodiments of the present disclosure.

The embodiments of the present disclosure further provide another computer program product which includes a non-volatile computer-readable storage medium. The non-volatile computer-readable storage medium is configured to store a computer program. The computer program, when executed by a process, implements the method in the embodiments of the present disclosure.

The embodiments of the present disclosure further provide a computer program. The computer program, when executed by a process, implements the method in the embodiments of the present disclosure.

Serial numbers provided for the above embodiments are for description only and do not imply any preference of one embodiment over another.

In the above embodiments of the present disclosure, descriptions of the embodiments each have their own emphasis, and parts of a certain embodiment that are not detailed may refer to relevant descriptions in other embodiments.

It should be appreciated that in the embodiments provided in the present disclosure, the technical content disclosed may be implemented by other means. The device embodiments described above are only illustrative. For example, the units may be divided by logical functions and may be divided in other ways in practical implementation. For example, multiple units or components may be combined with one another or integrated into another system, or some features may be ignored or may not be implemented. Further, coupling or direct coupling or communication connections as illustrated or discussed may be realized through interfaces, may be direct coupling or communication connections between units or modules, and may be electrical or in other forms.

A unit described as a separate part may or may not be physically separated, and a part shown as a unit may or may not be a physical unit, i.e., it may be in one place or may also be distributed over multiple units. Part of the unit or the entire unit may be selected and adopted according to actual needs to achieve the purpose of a present embodiment.

In addition, the functional units in each embodiment of the present disclosure may be integrated into a processing unit or may exist independently of one another, or two or more of the units may be integrated into one unit. The foregoing integrated unit may be implemented in the form of hardware or in the form of a software function unit.

The integrated unit, when implemented in the form of a software function unit and sold or used as a stand-alone product, may be stored in a computer-readable storage medium. Based on such a understanding, the technical solutions of the present disclosure in its essence, or parts thereof contributing to the existing technologies, or all or part of the technical solutions may be embodied in the form of a software product stored in a storage medium. The software product includes a number of instructions configured to enable a computer device (which may be a personal computer, a server, a network device, etc.) to perform all or some of the steps of the method described in each embodiment of the present disclosure. The storage medium may be a medium capable of storing program codes, such as a USB flash drive, a read-only memory (ROM), a random access memory (RAM), a mobile hard disk, a disk, an optical disk, etc.

Described above are merely preferred embodiments of the present disclosure. It should be noted that for those of ordinary skill in the art, various modifications and refinements may be made without departing from the principles of the present disclosure, and such modifications and refinements should also be considered as falling within the protection scope of the present disclosure.

## Claims

1. A method for constructing a waiting area road in a map, **characterized in that** the map is a low-definition map, comprising:
acquiring historical vehicle uploaded data(S11), wherein the historical vehicle uploaded data comprises road junction semantic information corresponding to the waiting area road and at least one historical vehicle travelling trajectory uploaded by a historical vehicle;
generating waiting area road structure information based on the road junction semantic information and the at least one historical vehicle travelling trajectory (S12), wherein the road junction semantic information comprises a first stop line, a pedestrian crossing area, and candidate branch lane lines, the first stop line representing a stop line of a through lane corresponding to the waiting area road; and
in response to receiving position information and navigation route information reported by a target vehicle, distributing the waiting area road structure information to the target vehicle (S13), so that the target vehicle displays the waiting area road structure information,
wherein the method further comprises: mapping the waiting area road structure information into a vehicle coordinate system; determining, in the vehicle coordinate system, position information of a waiting area centerline corresponding to the waiting area road structure information; and constructing the waiting area road using the position information of the waiting area centerline, wherein the waiting area road comprises waiting area lanes and corresponding stop lines; and
wherein said generating the waiting area road structure information based on the road junction semantic information and the at least one historical vehicle travelling trajectory (S12) comprises:
performing filtering processing on the historical vehicle uploaded data to obtain the first stop line and the pedestrian crossing area;
searching for lane lines within a preset range of the first stop line based on the first stop line and the pedestrian crossing area, to obtain a lane line search result and a stop line search result;
performing filtering processing on the lane line search result and the stop line search result to obtain waiting area lane lines;
performing filtering processing on the waiting area lane lines based on the at least one historical vehicle travelling trajectory to obtain the candidate branch lane lines;
determining at least one target waiting area using the candidate branch lane lines; and
generating the waiting area road structure information based on the at least one target waiting area.

2. The method according to claim 1, wherein the road junction semantic information further comprises a second stop line, the second stop line representing a stop line associated with the candidate branch lane lines.

3. The method according to claim 2, wherein said performing filtering processing on the lane line search result and the stop line search result to obtain the waiting area lane lines comprises:
determining the second stop line based on the first stop line associated with the stop line search result;
in response to the second stop line and the lane line search result satisfying a first position condition, performing association processing on the second stop line and the lane line search result to obtain an association pair result, wherein the first position condition represents an association snapping condition between the second stop line and the lane line search result; and
constructing the waiting area lane lines using the association pair result.

4. The method according to claim 2, wherein the waiting area road structure information comprises a first intersection position and a waiting area centerline, wherein the first intersection position represents a position of an intersection between the at least one historical vehicle travelling trajectory and the second stop line, and the waiting area centerline represents a lane centerline corresponding to the target waiting area,
wherein preferably the waiting area road structure information further comprises a second intersection position, a target angle, and a target distance, wherein the second intersection position represents a position of an intersection between the at least one historical vehicle travelling trajectory and the first stop line; the target angle represents an angle between a first normal direction of the first stop line and a second normal direction of the second stop line; and the target distance represents a distance between the first intersection position and the second intersection position.

5. The method according to claim **1,** wherein said distributing the waiting area road structure information to the target vehicle (S13) comprises:
determining, based on the received position information and navigation route information of the target vehicle, whether a waiting area road structure is present at a road junction to be traversed on a navigation route indicated by the navigation route information, the road junction being within a preset distance from a position indicated by the position information; and
if a waiting area road structure is present at the road junction to be traversed, sending the waiting area road structure information corresponding to the road junction to be traversed to the target vehicle,
or
wherein said distributing the waiting area road structure information to the target vehicle (S13) comprises:
acquiring, based on the navigation route information, the waiting area road structure information corresponding to the navigation route; and
sending all the waiting area road structure information corresponding to the navigation route to the target vehicle, such that the target vehicle finds corresponding waiting area road structure information that matches the position information,
or
wherein said distributing the waiting area road structure information to the target vehicle (S13) comprises:
acquiring, based on the navigation route information, the waiting area road structure information corresponding to the navigation route; and
periodically distributing, based on the position information, the waiting area road structure information corresponding to the navigation route in preset pieces to the target vehicle, such that the target vehicle finds a corresponding piece of waiting area road structure information that matches the position information.

6. The method according to claim 1, wherein the waiting area road comprises at least one of: a left-turn waiting area road, a right-turn waiting area road, and a straight-through waiting area road.

7. A vehicle for constructing a waiting area road in a map, wherein the map is a low-definition map, comprising:
a sending module (801), configured to send position information and navigation route information of the vehicle to a cloud server;
a receiving module (802), configured to receive waiting area road structure information distributed by the cloud server, wherein the waiting area road structure information is waiting area road structure information of a road junction to be traversed within a preset distance from a position indicated by the position information, wherein the waiting area road structure information is generated based on at least one target waiting area, the at least one target waiting area being determined based on candidate branch lane lines, the candidate branch lane lines being determined by filtering waiting area lane lines based on at least one historical vehicle travelling trajectory, the waiting area lane lines being determined by filtering based on a lane line search result and a stop line search result, the lane line search result and the stop line search result being determined by searching, within a preset range of a first stop line, lane lines based on the first stop line and a pedestrian crossing area, and the first stop line and the pedestrian crossing area being determined by filtering historical vehicle uploaded data; and
a displaying module (803), configured to display the waiting area road structure information by the vehicle,
wherein the vehicle further comprises a constructing module, configured to map the waiting area road structure information into a vehicle coordinate system; determine, in the vehicle coordinate system, position information of a waiting area centerline corresponding to the waiting area road structure information; and construct the waiting area road using the position information of the waiting area centerline, wherein the waiting area road comprises waiting area lanes and corresponding stop lines.

8. A vehicle for constructing a waiting area road in a map, **characterized in that** the map is a low-definition map, comprising:
a sending module (901), configured to send navigation route information of the vehicle to a cloud server;
a receiving module (902), configured to receive all waiting area road structure information corresponding to the navigation route distributed by the cloud server, wherein the waiting area road structure information is generated based on at least one target waiting area, the at least one target waiting area being determined based on candidate branch lane lines, the candidate branch lane lines being determined by filtering waiting area lane lines based on at least one historical vehicle travelling trajectory, the waiting area lane lines being determined by filtering based on a lane line search result and a stop line search result, the lane line search result and the stop line search result being determined by searching, within a preset range of a first stop line, lane lines based on the first stop line and a pedestrian crossing area, and the first stop line and the pedestrian crossing area being determined by filtering historical vehicle uploaded data;
a matching module (903), configured to find, from all the waiting area road structure information, a corresponding piece of waiting area road structure information that matches position information of the vehicle, wherein the corresponding piece of waiting area road structure information is waiting area road structure information of a road junction to be traversed within a preset distance from a position indicated by the position information; and
a displaying module (904), configured to display the corresponding piece of waiting area road structure information by the vehicle,
wherein the vehicle further comprises a constructing module, configured to map the waiting area road structure information into a vehicle coordinate system; determine, in the vehicle coordinate system, position information of a waiting area centerline corresponding to the waiting area road structure information; and construct the waiting area road using the position information of the waiting area centerline, wherein the waiting area road comprises waiting area lanes and corresponding stop lines.

9. A vehicle for constructing a waiting area road in a map, **characterized in that** the map is a low-definition map, comprising:
a sending module (1001), configured to send position information and navigation route information of the vehicle to a cloud server;
a receiving module (1002), configured to periodically receive preset pieces of waiting area road structure information distributed by the cloud server, wherein the waiting area road structure information is waiting area road structure information of road junctions to be traversed on the navigation route, wherein the waiting area road structure information is generated based on at least one target waiting area, the at least one target waiting area being determined based on candidate branch lane lines, the candidate branch lane lines being determined by filtering waiting area lane lines based on at least one historical vehicle travelling trajectory, the waiting area lane lines being determined by filtering based on a lane line search result and a stop line search result, the lane line search result and the stop line search result being determined by searching, within a preset range of a first stop line, lane lines based on the first stop line and a pedestrian crossing area, and the first stop line and the pedestrian crossing area being determined by filtering historical vehicle uploaded data;
a matching module (1003), configured to find, from the preset pieces of waiting area road structure information, a corresponding piece of waiting area road structure information that matches the position information of the vehicle, wherein the corresponding piece of waiting area road structure information is waiting area road structure information of a road junction to be traversed within a preset distance from a position indicated by the position information; and
a displaying module (1004), configured to display the corresponding piece of waiting area road structure information by the vehicle,
wherein the vehicle further comprises a constructing module, configured to map the waiting area road structure information into a vehicle coordinate system; determine, in the vehicle coordinate system, position information of a waiting area centerline corresponding to the waiting area road structure information; and construct the waiting area road using the position information of the waiting area centerline, wherein the waiting area road comprises waiting area lanes and corresponding stop lines.

10. A vehicle for constructing a waiting area road in a map, **characterized in that** the map is a low-definition map, comprising:
an acquiring module (1101), configured to acquire position information and navigation route information of the vehicle and vehicle historical data stored in a storage module, wherein the vehicle historical data comprises road junction semantic information corresponding to the waiting area road and at least one historical travelling trajectory;
a generating module (1102), configured to generate waiting area road structure information based on the road junction semantic information and the at least one historical travelling trajectory, wherein the road junction semantic information comprises a first stop line, a pedestrian crossing area, and candidate branch lane lines, the first stop line representing a stop line of a through lane corresponding to the waiting area road;
a matching module (1103), configured to find a corresponding piece of waiting area road structure information that matches the position information and the navigation route information; and
a displaying module (1104), configured to display the corresponding piece of waiting area road structure information by the vehicle,
wherein the vehicle further comprises a constructing module, configured to map the waiting area road structure information into a vehicle coordinate system; determine, in the vehicle coordinate system, position information of a waiting area centerline corresponding to the waiting area road structure information; and construct the waiting area road using the position information of the waiting area centerline, wherein the waiting area road comprises waiting area lanes and corresponding stop lines, and
wherein the generating module further comprises:
a first filtering unit, configured to perform filtering processing on the vehicle historical data to obtain the first stop line and the pedestrian crossing area;
a searching unit, configured to search for lane lines within a preset range of the first stop line based on the first stop line and the pedestrian crossing area to obtain a lane line search result and a stop line search result;
a second filtering unit, configured to perform filtering processing on the lane line search result and the stop line search result to obtain waiting area lane lines;
a third filtering unit, configured to perform filtering processing on the waiting area lane lines based on the at least one historical travelling trajectory to obtain the candidate branch lane lines;
a determining unit, configured to determine at least one target waiting area based on the candidate branch lane lines; and
a generating unit, configured to generate the waiting area road structure information based on the at least one target waiting area.

11. The vehicle according to claim 10, wherein the road junction semantic information further comprises a second stop line, the second stop line representing a stop line associated with the candidate branch lane lines.

12. The vehicle according to claim 11, wherein the second filtering unit is further configured to:
determine the second stop line based on the first stop line associated with the stop line search result;
in response to the second stop line and the lane line search result satisfying a first position condition, perform association processing on the second stop line with the lane line search result to obtain an association pair result, wherein the first position condition represents an association snapping condition between the second stop line and the lane line search result; and
construct the waiting area lane lines using the association pair result.

13. The vehicle according to claim 11, wherein the waiting area road structure information comprises a first intersection position and a waiting area centerline, wherein: the first intersection position represents a position of an intersection between the at least one historical travelling trajectory and the second stop line, and the waiting area centerline represents a lane centerline corresponding to the target waiting area,
wherein preferably the waiting area road structure information further comprises: a second intersection position, a target angle, and a target distance, wherein: the second intersection position represents a position of an intersection between the at least one historical travelling trajectory and the first stop line; the target angle represents an angle between a first normal direction of the first stop line and a second normal direction of the second stop line; and the target distance represents a distance between the first intersection position and the second intersection position.

14. The vehicle according to claim 10, wherein the matching module further comprises:
a determination unit, configured to determine, based on the position information and the navigation route information, whether a waiting area road structure is present at a road junction to be traversed on a navigation route indicated by the navigation route information, the road junction being within a preset distance from a position indicated by the position information; and
a first matching unit, configured to find, if a waiting area road structure is present at the road junction to be traversed, the waiting area road structure information corresponding to the road junction to be traversed that matches the position information,
or
wherein the matching module further comprises:
a first acquiring unit, configured to obtain, based on the navigation route information, all waiting area road structure information corresponding to the navigation route; and
a second matching unit, configured to find, from all the waiting area road structure information, a corresponding piece of waiting area road structure information that matches the position information, wherein the corresponding piece of waiting area road structure information is waiting area road structure information of a road junction to be traversed within a preset distance from a position indicated by the position information,
or
wherein the matching module further comprises:
a second acquiring unit, configured to periodically acquire preset pieces of waiting area road structure information corresponding to the navigation route based on the navigation route information; and
a third matching unit, configured to find, from the preset pieces of waiting area road structure information corresponding to the navigation route, a corresponding piece of waiting area road structure information that matches the position information, wherein the corresponding piece of waiting area road structure information is waiting area road structure information of a road junction to be traversed within a preset distance from a position indicated by the position information,
or
wherein the waiting area road includes one of: a left-turn waiting area road, a right-turn waiting area road, and a straight-through waiting area road.

15. A cloud server, comprising:
a processor; and
a memory, configured to store instructions executable by the processor,
wherein the processor is configured to execute the instructions to implement the method for constructing a waiting area road in a map according to any one of claims 1 to 6.
